# EUROPÄISCHE PATENTSCHRIFT

(11) **EP 0 812 879 B1**
(45) Veröffentlichungstag und Bekanntmachung des Hinweises auf die Patenterteilung: **22.12.1999**
(21) Anmeldenummer: 97109290.3
(22) Anmeldetag: 09.06.1997
(51) Int. Cl.: C08K 5/09, B60C 1/00, C08L 21/00

(54) **Kautschukmischung für Reifenlaufstreifen**
Rubber composition for tire treads
Composition de caoutchouc pour bandes de roulement pour pneumatiques

(30) Priorität: 12.06.1996 DE 19623346
(43) Veröffentlichungstag der Anmeldung: 17.12.1997
(73) Patentinhaber: Continental Aktiengesellschaft, 30165 Hannover (DE)
(72) Erfinder: Bertrand, Joachim, Dr., 30926 Seelze (DE); Söhnen, Dietmar, Dr., 31867 Lauenau (DE)

(56) Entgegenhaltungen:
- EP-A- 0 695 780
- WO-A-95/34601
- US-A- 2 325 737
- DATABASE WPI Section Ch, Week 9731 Derwent Publications Ltd., London, GB; Class A12, AN 97-337139 XP002041831 & JP 09 136 996 A (BRIDGESTONE CORP) , 27.Mai 1997
- KIRK OTHMER: "Encyclopedia of Chemical Technology (3rd. Ed.)" , , J. WYLEY & SONS, NEW YORK

## Beschreibung

Die Erfindung betrifft eine mit Schwefel vulkanisierbare Kautschukmischung, insbesondere für Reifenlaufstreifen.

Um die Laufleistung eines Reifens, die wesentlich von dessen Laufstreifenzusammensetzung abhängt, zu verbessern, wurden zahlreiche Versuche unternommen, durch Variation der Mischungszusammensetzung die Reifeneigenschaften zu optimieren, gleichzeitig sollen aber die Verarbeitbarkeit und der Verstärkungseffekt des Füllstoffes erhalten bleiben.

Eine gute Verarbeitbarkeit und Konfektionsklebrigkeit von Kautschukmischungen für Produkte mit guten mechanischen Eigenschaften läßt sich z. B. durch die aus der US-A 2 325 737 bekannten Verwendung von dehydrogeniertem Kolophonium als Weich- und Klebrigmacher erreichen. Das Kolophoniumderivat erhöht die Aktivität des Beschleunigers. Des weiteren ist es bekannt, in Mischungen für Laufstreifen als Füllstoff Kieselsäure einzusetzen. Der Einsatz von Kieselsäure bringt die Verwendung von Silankupplungsreagenzien mit sich, wobei letztgenannte selbst wiederum mit einigen Nachteilen verbunden sind. Ein Teil des Silan-Kupplungsreagenzes kann aber durch die Verwendung einer besonderen, aus der WO-95 34 601 bekannten Kombination von einem speziellen AntiReversions-Coagens, welches mindestens zwei Gruppen Citraconimid und/oder ltaconimid aufweist, mit bestimmten vulkanisationsverbessernden Harzen ersetzt werden. Mischungen, die diese besondere Kombination aufweisen, können für Reifenlaufstreifen mit vorteilhaften Eigenschaften eingesetzt werden.

Reifen mit Laufflächen, welche Kieselsäure als Füllstoff enthalten, weisen einen geringen Rollwiderstand auf. Durch die Verringerung des Rollwiderstandes, was auch eine geringe Geräuschentwicklung mit sich bringt, werden gleichzeitig aber die Naßhaftung und das Handling (Spurführung) negativ beeinflußt. So ist vor allem die Haftung des Reifens auf nasser oder feuchter Fahrbahn insbesondere bei Fahrzeugen ohne Anti-Blockiersystem (ABS) unbefriedigend. Weiterhin nachteilig bei den kieselsäurehaltigen Laufstreifenmischungen ist, daß sie einen erhöhten Abrieb z. B. im Vergleich zu Ruß enthaltenden Laufstreifenmischungen verzeichnen.

Die Aufgabe der hier vorliegenden Erfindung besteht darin, eine Reifenlaufstreifenmischung bereitzustellen, die dem Reifen hervorragende Naßgriffeigenschaften bei gleichzeitig geringem Rollwiderstand und verbessertem Abrieb verleiht.

Diese Aufgabe wird erfindungsgemäß dadurch gelöst, daß eine mit Schwefel vulkanisierbare Kautschukmischung, insbesondere für Reifenlaufstreifen, bezogen auf 100 Gewichtsteile der Gesamtkautschukmasse
a) 100 Gewichtsteile zumindest eines Dienelastomers,
b) 5 - 100 Gewichtsteile feinverteilte gefällte Kieselsäure,
c) 0 - 95 Gewichtsteile Ruß,
d) 0,1 - 10 Gewichtsteile Abietinsäure, Dehydroabietinsäure, Tetrahydroabietinsäure, Dihydroabietinsäure, deren Isomere und/oder Mischungen hieraus,
e) 0,05 - 2 Gewichtsteile Zinkdibenzyldithiocarbamat und/oder Tetrabenzylthiuramdisulfid als Ultrabeschleuniger und
f) weitere übliche Zusatzstoffe enthält.

Die Erfindung beruht auf der Erkenntnis, daß durch die Kombination von feinverteilter gefällter Kieselsäure in Verbindung mit Abietinsäure, Dehydroabiethinsäure, Tetrahydroabietinsäure, Dihydroabietinsäure, deren Isomere und/oder Mischungen hieraus und eines Ultrabeschleunigers Kautschukmischungen z. B. für Reifenlaufstreifen erzeugt werden, die trotz geringem Rollwiderstand ein sehr gutes Naßrutschverhalten zeigen und gleichzeitig einen verminderten Abrieb aufweisen.

Unter den Begriff Dienelastomer sollen Naturkautschuk, synthetisches Polyisopren, Polybutadien, Acryl-Nitril-Butadien-Copolymer, Styren-Butadien-Copolymer (in Lösung oder in Emulsion polymerisiert), Isobutylen-lsopren-Copolymer und/oder Mischungen hieraus fallen.

Gemäß der Erfindung kann grundsätzlich jede feinverteilte gefällte Kieselsäure eingesetzt werden, wie sie üblicherweise bei der Herstellung von Kautschukmischungen eingesetzt wird. In diesem Zusammenhang sei auch auf die in der EP 0 501 227, EP 0 157 703 und der DE 24 10 014 beschriebenen Kieselsäuren verwiesen. Es können demnach allgemein gefällte und feinverteilte Kieselsäuren für die erfindungsgemäße Mischungszusammensetzung verwendet werden, die eine BET-Fläche von 40 bis 350 m²/g, eine CTAB-Fläche von 50 - 350 m²/g und eine DBP-Absorption von 50 - 350 ml/100 g besitzen. Auch sei auf die Kieselsäure, deren Herstellung und Eigenschaften in der DE 44 00 996 beschrieben sind, verwiesen. Die Menge an feinverteilter gefällter Kieselsäure soll bevorzugt 30 bis 85 pphr betragen. Die Kieselsäure wird bei deren Verwendung in einer Kautschukmischung wie üblich mit einem Silanierungsmittel (z. B. Bis- (3-triethoxisilylpropyl)tetrasulfid (TESPT)) behandelt.

Als Ruß sollen Typen verwendet werden, die eine Dibutylphthalatadsorption (DBPA-Zahl) von 30 bis 200 cm³/100 g (ASTMD 24 14), eine lodadsorptionszahl von 10 bis 250 g/kg (ASTMD 15 10) sowie eine CTAB-Zahl von 5 bis 150 m²/g (ASTMD 37 65) besitzen. Die Rußteilchen sollen einen für den Fachmann allgemein üblichen mittleren Durchmesser aufweisen. Es kann aber außerdem auch der in der DE 44 00 996 offenbarte Rußtyp Verwendung finden.

Als Ultrabeschleuniger werden Dithiocarbamat- und Thiurambeschleuniger in einer Konzentration von 0,05 - 2 pphr eingesetzt. Als günstig haben sich Zinkdibenzyldithiocarbamat und Tetrabenzylthiuramdisulfid erwiesen.

Als besonders vorteilhaft haben sich Ultrabeschleunigerkonzentrationen zwischen 0,2 und 0,3 pphr bewährt. Bei dieser Konzentration wird eine schnelle Anvulkanisation der Mischung erreicht und die Ausvulkanisation der Mischung kann durch die Zugabe von Vulkanisationsverzögerern bzw. Sekundärbeschleunigern optimal beeinflußt werden, so daß sich deren Zusatz positiv auf die Prozeßführung der Herstellung auswirkt.

Weiterhin sind in der erfindungsgemäßen Kautschukmischung übliche Zusatzstoffe, wie z. B. Schwefelweichmacher, Schutzwachse oder Vulkanisationsverzögerer enthalten. Außerdem sind für die Vulkanisation weitere Beschleuniger (z.B. Thioharnstoffe, Mercaptobeschleuniger, Sulfenamidbeschleuniger, Dithiophosphate, Guanidine) erforderlich, die mit den Ultrabeschleunigern eine Synergie eingehen, damit die erfindungsgemäße Kautschukmischung den gewünschten Vernetzungsgrad aufweist.

Als für die Erfindung wesentliche Substanz soll Abietinsäure, Dehydroabietinsäure, Tetrahydroabietinsäure, Dihydroabietinsäure, deren Isomere und/oder Mischungen hieraus in einer Menge von 0,1 - 10 pphr, bevorzugt 3 - 6 pphr eingesetzt werden. Derivate des Kolophoniums sind zwar für das Einmischen in rußgefüllten Kautschukmischungen bekannt, jedoch dienen diese im allgemeinen zur Erhöhung der Konfektionsklebrigkeit der Kautschukmischung, um somit die Verarbeitung zu erleichtern.

Durch die Kombination dieser Substanzen werden Kautschukmischungen erzielt, die hervorragende Abriebeigenschaften aufweisen. Gleichzeitig wird das Naßrutschverhalten positiv beeinflußt, ohne Einbußen im Rollwiderstand hinnehmen zu müssen.

Anhand der folgenden Tabelle soll ein Ausführungsbeispiel näher erläutert werden:

| **Bestandteil** | **Vergleichszusammensetzung I** | **Erfindungszusammensetzung II** |
|---|---|---|
| Naturkautschuk (NR) | 10 | 10 |
| Butadienkautschuk (BR) | 35 | 35 |
| Lösungspolym. Styren-Butadien-Kautschuk(SSBR) | 75.625 | 75.625 |
| Ruß | 10 | 10 |
| feinverteilte gefällte Kieselsäure | 70 | 70 |
| aromatisches Öl | 13.34 | 13.34 |
| X50S (TESPT auf Ruß N330) | 12.5 | 12.5 |
| Zinkoxid | 2.5 | 2.5 |
| Stearinsäure | 1 | 1 |
| Abietinsäure | - | 4 |
| Alterungsschutzmittel | 4 | 4 |
| Zinkdibenzyldithiocarbamat (ZBEC) | - | 0,25 |
| Diphenylguanidin (DPG) | 2 | 1.5 |
| N-Cyclohexylbenzthiazylsulfenamid (CBS) | 1.5 | 1.5 |
| Schwefel | 1.5 | 1.5 |

Diese Bestandteile werden auf herkömmlicher Art und Weise gemischt und als extrudierte Kautschukmischungsplatte beim Reifenwickelprozeß als Laufstreifen aufgelegt. Anschließend wird der Reifenrohling bei 150 °C 30 Minuten vulkanisiert.

Für den vulkanisierten Reifen wurden folgende Eigenschaften registriert:

| **Eigenschaften** | **I** | | **II** | |
|---|---|---|---|---|
| | **23 °C** | **70 °C** | **23 °C** | **70 °C** |
| Härte (Shore A) | 63,7 | 59,3 | 64,8 | 61,3 |
| **Rückprallelastizität [%] (Rehbaum-Test)** | **35,7** | **51,6** | **33,2** | **54,2** |
| Spannungswert (100 %) [MPa] | 2,00 | 1,88 | 2,21 | 2,04 |
| Spannungswert (300 %) [MPa] | 8,34 | 7,22 | 8,97 | 7,73 |
| Zugfestigkeit [MPa] | 14,13 | 9,28 | 15,24 | 9,64 |
| Reißfestigkeit [%] | 484 | 397 | 491 | 388 |
| **DIN-Abrieb [mm**^{**3**}**]** | **105** | | **99** | |

Die Werte der Rückprallelastizität bei 23 °C des Reifens mit der Laufstreifenzusammensetzung II sind geringer als bei dem Reifen mit der Laufstreifenzusammensetzung I. Daraus ergibt sich ein besseres Naßrutschverhalten für den Reifen II.

Bei der Messung der Rückprallelastizität bei 70°C sind jedoch höhere Werte bei dem Reifen mit der Laufstreifenzusammensetzung II zu verzeichnen. Daraus resultiert, daß der Reifen II einen geringeren Rollwiderstand aufweist. Außerdem wird der Abrieb beim Reifen II verringert.

Mit der erfindungsgemäßen Kautschukmischung für Laufstreifen werden also Reifen erzielt, die einen hervorragenden Naßgriff bei gleichzeitig geringem Rollwiderstand aufweisen und einen verminderten Abrieb verzeichnen.

## Patentansprüche

1. Mit Schwefel vulkanisierbare Kautschukmischung, insbesondere für Reifenlaufstreifen, die, bezogen auf 100 Gewichtsteile der Gesamtkautschukmasse,
a) 100 Gewichtsteile zumindest eines Dienelastomers,
b) 5 - 100 Gewichtsteile feinverteilte gefällte Kieselsäure,
c) 0 - 95 Gewichtsteile Ruß,
d) 0,1 - 10 Gewichtsteile Abietinsäure, Dehydroabietinsäure, Tetrahydroabietinsäure, Dihydroabietinsäure, deren Isomere und/oder Mischungen hieraus,
e) 0,05 - 2 Gewichtsteile Zinkdibenzyldithiocarbamat und/oder Tetrabenzylthiuramdisulfid als Ultrabeschleuniger und
f) weitere übliche Zusatzstoffe enthält.

2. Kautschukmischung nach Anspruch 1, dadurch gekennzeichnet, daß das Dienelastomer ausgewählt ist aus Naturkautschuk, synthetischem Polyisopren, Polybutadien, Acrylnitril-Butadien-Copolymer, Styren-Butadien-Copolymer, Isobutylen-lsopren-Copolymer und/oder Mischungen hieraus.

3. Kautschukmischung nach Anspruch 1 und/oder 2, dadurch gekennzeichnet, daß die Kautschukmischung 0,2 - 0,3 Gewichtsteile Zinkdibenzyldithiocarbamat und/oder Tetrabenzylthiuramdisulfid als Ultrabeschleuniger enthält.

4. Kautschukmischung nach zumindest einem der vorhergehenden Ansprüche, dadurch gekennzeichnet, daß die Kautschukmischung 30 - 85 Gewichtsteile feinverteilte gefällte Kieselsäure enthält.

5. Kautschukmischung nach zumindest einem der vorhergehenden Ansprüche, dadurch gekennzeichnet, daß die Kautschukmischung 3 - 6 Gewichtsteile Abietinsäure, Dehydroabietinsäure, Tetrahydroabietinsäure, Dihydroabietinsäure, deren Isomere und/oder Mischungen hieraus enthält.

6. Fahrzeugreifen, dadurch gekennzeichnet, daß dieser einen Laufstreifen aufweist, der aus einer Kautschukmischung nach zumindest einem der vorhergehenden Ansprüche hergestellt ist.

## Claims

1. Rubber mixture, more especially for tyre tread strips, which mixture is vulcanisable with sulphur and contains, relative to 100 parts by weight of the total rubber mass,
a) 100 parts by weight of at least one diene elastomer,
b) 5 - 100 parts by weight finely divided, precipitated silica,
c) 0 - 95 parts by weight carbon black,
d) 0.1 - 10 parts by weight abietic acid, dehydroabietic acid, tetrahydroabietic acid, dihydroabietic acid, their isomers and/or mixtures thereof,
e) 0.05 - 2 parts by weight zinc dibenzyl dithiocarbamate and/or tetrabenzyl thiuramdisulphide as the ultra-accelerator, and
f) additional conventional additives.

2. Rubber mixture according to claim 1, characterised in that the diene elastomer is selected from natural rubber, synthetic polyisoprene, polybutadiene, acrylonitrile-butadiene copolymer, styrene-butadiene copolymer, isobutylene-isoprene copolymer and/or mixtures thereof.

3. Rubber mixture according to claim 1 and/or 2, characterised in that the rubber mixture contains 0.2 - 0.3 parts by weight zinc dibenzyl dithiocarbamate and/or tetrabenzyl thiuramdisulphide as the ultra-accelerator.

4. Rubber mixture according to at least one of the preceding claims, characterised in that the rubber mixture contains 30 - 85 parts by weight finely divided, precipitated silica.

5. Rubber mixture according to at least one of the preceding claims, characterised in that the rubber mixture contains 3 - 6 parts by weight abietic acid, dehydroabietic acid, tetrahydroabietic acid, dihydroabietic acid, their isomers and/or mixtures thereof.

6. Vehicle tyre, characterised in that it has a tread strip which is produced from a rubber mixture according to at least one of the preceding claims.

## Revendications

1. Composition de caoutchouc vulcanisable avec du soufre, notamment pour des bandes de roulement de pneumatiques, contenant, ramené à 100 parties en poids de la masse totale du caoutchouc :
a) 100 parties en poids d'au moins un élastomère de diène,
b) de 5 à 100 parties en poids d'acide silicique précipité finement divisé,
c) de 0 à 95 parties en poids de noir de carbone,
d) de 0,1 à 10 parties en poids d'acide abiétique, d'acide déshydroabiétique, d'acide tétrahydroabiétique, d'acide dihydroabiétique, d'isomères et/ou de mélanges de ceux-ci,
e) de 0,05 à 2 parties en poids de dibenzyldithiocarbamate de zinc et/ou de disulfure de tétrabenzylthiuram comme ultra-activateur, et
f) d'autres additifs usuels.

2. Composition de caoutchouc selon la revendication 1, caractérisée en ce que l'élastomère de diène est choisi dans le groupe comprenant le caoutchouc naturel, le polyisoprène synthétique, le polybutadiène, le copolymère d'acrylonitrile et de butadiène, le copolymère de styrène et de butadiène, le copolymère d'isobutylène et d'isoprène et/ou les mélanges de ceux-ci.

3. Composition de caoutchouc selon la revendication 1 et/ou la revendication 2, caractérisée en ce que la composition de caoutchouc contient de 0,2 à 0,3 parties en poids de dibenzyldithiocarbamate de zinc et/ou de disulfure de tétrabenzylthiuram comme ultra-activateur.

4. Composition de caoutchouc selon l'une au moins des revendications précédentes, caractérisée en ce que la composition de caoutchouc contient de 30 à 85 parties en poids d'acide silicique précipité finement divisé.

5. Composition de caoutchouc selon l'une au moins des revendications précédentes, caractérisée en ce que la composition de caoutchouc contient de 3 à 6 parties en poids d'acide abiétique, d'acide déshydroabiétique, d'acide tétrahydroabiétique, d'acide dihydroabiétique, d'isomères et/ou de mélanges de ceux-ci.

6. Pneumatique pour véhicules, caractérisé en ce qu'il présente une bande de roulement fabriquée à partir d'une composition de caoutchouc selon l'une au moins des revendications précédentes.
